Europäisches Patentamt

(19) European Patent Office

Office européen des brevets

(11) Publication number: **0 101 066**
**B1**

(12) **EUROPEAN PATENT SPECIFICATION**

(45) Date of publication of patent specification: **21.12.88**

(21) Application number: **83107899.3**

(22) Date of filing: **10.08.83**

(51) Int. Cl.⁴: **A 61 H 9/00**

(54) **Liquid-spraying system.**

(30) Priority: **14.08.82 CH 4855/82**

(43) Date of publication of application:
**22.02.84 Bulletin 84/08**

(45) Publication of the grant of the patent:
**21.12.88 Bulletin 88/51**

(84) Designated Contracting States:
**AT BE CH DE FR GB IT LI LU NL SE**

(56) References cited:
**DE-A-2 432 126**
**FR-A-2 032 014**
**US-A-3 727 841**

(73) Proprietor: **Utzinger, Gustav E. Dr. Phil.**
**Kastelweid 231**
**CH-4249 Himmelried (CH)**

(72) Inventor: **Utzinger, Gustav E. Dr. Phil.**
**Kastelweid 231**
**CH-4249 Himmelried (CH)**

Courier Press, Leamington Spa, England.

## Description

This invention relates to a liquid-spraying system comprising

(a) an elongated tubular conduit means adapted for the flow of liquid therethrough,

(b) a tube wall of liquid-tight, elastically resilient material,

(c) liquid feeding means connected to one of the ends of the conduit means,

(d) closing means for at least substantially closing off the other end of the conduit means, and

(e) a plurality of perforations of substantially circular cross sectional area through the tube wall and leading from the conduit interior to outside of the external tube wall surface.

It will be understood that the tubular conduit means, e.g. a hose, has two ends and an elongated conduit interior extending from one end of the conduit means to the other that the tube wall surrounds the elongated conduit interior and has an external and an internal tube wall surface, and that the liquid feeding means are adapted for causing liquid to flow into the conduit interior.

More specifically, the invention relates to a therapeutically liquid-spraying system comprising:

(a) an elongated tubular conduit means adapted for the flow of liquid therethrough, and being of the configuration of a helix having a central helix axis and confining an internal helix space,

said helix being positioned with its axis disposed vertically, the diameter and height of said helix being such as to house a person standing or sitting within the internal space of said helix, which conduit means comprise:

(b) a tube wall of liquid-tight, elastically resilient material, being non-swelling in contact with water of a temperature of at least 60°C, said tube wall surrounding an elongated conduit interior and having an external and an internal tube wall surface,

(c) liquid feeding means connected to one of said ends and apated for causing a liquid flow into said conduit interior,

(d) closing means for at least substantially closing off the other end of said conduit means,

(e) a plurality of uniform capillary active perforations of substantially circular cross sectional area through said tube wall leading from said conduit interior to outside said external tube wall surface, said perforations being substantially uniformly distributed over a spraying zone of determined length of said conduit means tube wall,

the perforations are located in a row on the inner side of the tubular conduit means, face toward the internal helix space and directing a plurality of fine liquid jets toward the said helix axis in all zones of said internal helix space.

This type of shower system has been described in the French patent to Saerexi, of Calvados, France, having Publication No. 2,032,014. This shower system is also provided with suspension means connecting the windings of the tube constituting the helix at a given spacing and support means from which the suspension means depend and which can comprise a systm of crinoline-like rings.

However, when using tubes having a conventional type of perforation in a given configuration and arrangement of the holes in the tube wall, it has been found that the user will not be able to suffer, over a prolonged period of time, i.e. several minutes up to 5 or even 10 minutes, water jets having a temperature of more than 40°C, and usually only about 38° to 39°C, i.e. one or two degrees above normal body temperature.

When taking a normal shower, a water temperature above 40°C (104°F) is barely supported by the user. The shower also has a stimulating effect on blood circulation, however the bundle of water impinges in a relatively limited area of the user's body and still leaves areas of the skin unattained which permits the user to register temperature differences which cause such person to stop the shower, usually without having reached transpiration. On an average, a shower is used by a person for less than 3 minutes.

Installations as can be found in spas, which permit thermal baths or prolonged showers, require costly apparatus and personnel.

Specific dimensions are given for a multiple jet fluid spraying system described in U.S. patent 3,727,841 to Hengesbach. The looped tubes to be used in the Hensesbach system are to be extruded from clear cellulose acetate butyrate having an outside diameter of 9.4 mm (3/8") and an inside diameter of 7.8 mm (5/16"). Tubes of 42' (12.60 m) are to be perforated at a spacing, between adjacent orifices, of 15 cm (6"), and each orifice having an internal width of 0.5 mm to 0.8 mm.

Liquid-spraying systems of the above-described kind are described, for instance in British patent 1,389,971 of Compagnie Nationale d'Aménagement de la Région du Bas-Rhône et du Languedoc S.A., which patent describes a plant irrigation system comprising a perforated water distribution grid or flexible tube, for instance of PVC or polyethylene, which has perforations or nozzles with an orifice of from about 7 to 20 mm² wide. From these nozzles water is not ejected in a free jet to the outside, but is led via small tubes of 6 mm internal diameter to a row of pots containing one or more plants.

In this British patent there is also described a drop-by-drop watering of plants. However, in the perforated hoses used for this method of irrigation, the instantaneous discharge of water at each perforation must be very small so that the total discharge of a distribution grid is low and the pressure losses are practically zero. In these conditions, the pressure along the hose or grids is practically constant, and identical perforations discharge approximately the same quantity of water.

However, perforations having the small diameters required can be blocked in various ways, by small solid grains transported by the water, by organic debris, by deposition of salts dissolved in the water or by micro-organisms, algae etc, so that certain perforations will become clogged and the spraying effect of the whole system will become irregular and will no longer be uniform.

At a working pressure varying from 0.3 to 1.5 bar, each nozzle of this irrigation system delivers about 70 liters of water per hour, while a perforation delivering water dropwise is said to give an hourly discharge of between 3 and 10 liters.

Perforated hoses for irrigation by trickling water and having the initially described features are also disclosed in German Offenlegungsschrift 28 35 117 by Sumitomo Chemical Co. Ltd. These hoses can be made from thermoplastic synthetic resin materials, and preferably from polyolefin resins, such as polyethylene, ethylene/vinyl acetate mixed polmerizate, polypropylene and the like and have a wall thickness of less than 0.5 mm and preferably from 0.05 to 0.3 mm. These hoses are made with two passages, a main duct into which the water is fed and from which it passes through connecting orifices into a parallel equalized-pressure duct. From the latter duct the water is released slowly through trickling orifices on to the plants being irrigated. The perforations in this kind of hose should be elongated rectangular slots of about 2—8 mm in the case of the connecting orifices, while orifices of circular cross section and a diameter of 2 mm are said to deteriorate the self-cleaning effect achieved by using these hoses. Preferably the rectangular perforations should have a ratio of length to width of about 0.5 to 5, i.e. a perforatian having a diameter of 2 mm should be 20 mm long and then has an opening of 40 mm². The diameter of the trickling orifices is shown to be from about one half to approximately the same diameter as the connecting orifices.

Sprinkler hoses are also available in the market which have slots cut into rubber or the like material in lieu of punched-out circular holes or rectangular slots.

These known spraying and trickling systems and others using hoses of rubber or thermoplastic synthetic resin material deliver a liquid, in particular water, in jet form, at a high rate of 50 to 100 liters per hour from orifices having at least about 1 mm² of cross sectional area, or dropwise at a discharge rate of 3 to 10 liters per hour.

Shower nozzles have, among others, the drawback of limiting the area covered by the jets emerging from holes punched or pierced especially in metal heads to such small size that water temperatures supported by a person taking a shower with such type of nozzle will be limited to about 40°C maximally.

It is, therefore, a principal object of the invention to provide a spraying system using perforated conduit means made of certain elastically resilient materials which permits the distribution of a liquid such as water over a long distance, e.g. 20 to 50 meters through a large number, e.g.

several hundred perforations, in the form of uniform fine, preferably discontinuous jets which are substantially free from trickling, without an unadmissible drop in pressure.

This object and others which will become apparent from the description of other aspects of this invention further below, are attained in accordance with the invention by a therapeutically effective liquid-spraying system of the type initially described in the Saerexi French patent (Publication No. 2,032,014), which is characterized in that

the perforations have an outlet size in the order of 0.8 mm diameter,

the length of the spraying zone is from about 10 to 20 meters,

the distance between two adjacent perforations (12) ranges from at least 2,5 to 10 cm, and preferably from about 5 to 7 cm, and

the internal diameter of the conduit is about 15 mm.

As can be seen from the foregoing, the perforations must be small enough to produce capillary forces between water and the material of the surrounding tube wall sufficient to substantially prevent water filling the conduit interior from flowing out of the perforations while the water in the conduit interior is under ambient pressure, but being sufficiently large and of such configuration as to permit ejection of the liquid jet substantially free from trickling, when the liquid in the conduit interior is under excess pressure at least of the magnitude derived from a water main.

Excess pressure in the water main fluctuates between 0.3 and 1.5 bar.

When the pressure source, e.g. the water main to which the liquid feeding means are connected is turned off, the liquid remaining in the conduit interior should preferably be held back by the capillary forces active in the perforations due to their size and configuration, and to the interface tension between the liquid and the surrounding tube wall material. These capillary forces should be at least strong enough so that no more than a trickle of liquid should slowly emerge from the perforations, for instance when the spraying zone of the conduit means tube wall is very long, e.g. 10 to 20 meters or more and extends in vertical position, the number of perforations then being at least 150 to 300 or more.

It is important for achieving the advantageous results which are the object of the instant invention that the perforations have a capillary diameter, i.e. that they open to eject a liquid jet, only when the conduit interior is connected to a low excess pressure source such as a water main, or to a similar source delivering another liquid at a pressure at least in the same range as that of the water main.

The perforations are preferably uniformly distributed over the entire spraying zone of the conduit means tube wall.

Preferably, the tube wall material is an extruded thermo-plastic synthetic resin having a tensile modulus of from about 1000 to 6000 N/mm² and a flexural modulus at 23°C of from about 500 and up to 5000 N/mm², in particular a polyamide, a poly-perfluoro-lower alkylene resin, a mixture of polyamide with at least one of polyethylene and polypropylene, a perfluoro alkoxy resin, or a lower alkylene/lower perfluoro-lower alkylene copolymer.

The extruded polyamide resins mentioned above, in particular Nylon 6, Nylon 66, Nylon 6/12, Nylon 11 or Nylon 12 were measured dry as molded, i.e. with a moisture content of about 0.2% by weight, and a 3 mm thick specimen of these resins showed a water absorption of about 0.2 to 0.6% by weight during 24 hours. The density of the above mentioned suitable polyamides ranged from 1.01 to 1.3 g/ml. The tensile modulus of Nylon 6 is given as 2620 N/mm², that of Nylon 6/12 as 2000, Nylon 11 as 1276, Nylon 12 as 1241, amorphous transparent aromatic polyamide 2620 to 2830 N/mm².

Preferred polyamides are Grilamid L 20 G, L 25 and L 20 WO, whose flexural modulus is 900, 900 and 1100 N/mm², respectively. The flexural modulus of these polyamides is the following: Nylon 6: 2690, Nylon 6/12: 2000, Nylon 11: 1034, Nylon 12: 1138, and amorphous transparent unreinforced aromatic polyamides 2206 to 2700 N/mm².

The mechanical properties of fluoro plastics are similar to those of medium density polyethlene. Thus, Teflon FEP (poly-fluorinated ethylene-propylene), Teflon PFA (poly-perfluoro-alkoxy-ethylene and Teflon PTFE (poly tetrafluoroethylene) all have a flexural modulus of 667, 558—690 and 667 N/mm², respectively.

Teflon FEP, PFA and PTFE have a tensile modulus of 2413, 4826 and 2413 to 5171 N/mm², respectively.

The thickness of the tube wall of the elongated conduit means of the liquid-spraying system according to the invention preferably ranges from 0.8 to 2.5 mm, it is preferably considerably greater than the thickness recommended for the perforated water trickling hose described by Sumitomo Chemical Co. Ltd. in German Offenlegungsschrift 28 35 117.

The production of the perforations having the above described properties required for achieving a satisfactory spraying of liquid by the spraying system according to the invention, in the elastically resilient extruded tube wall material which is needed for attaining all of the objects of the invention, meets with certain difficulties, which are not encountered when producing similar perforations in metal tubing.

Piercing the perforations with the aid of a fine needle leads to the formation of burr on the internal tube wall surface which obstructs the flow of liquid from the conduit interior into the perforation in an irregular manner. Piercing with heated needles leads to adhesion of the softened tube wall material to the needles and an irregular perforation.

The best mode of producing these perforations having the above-described properties is by boring these perforations with the aid of a twist drill.

Perforations bored with a twist drill having a diameter of about 1 mm and a pitch of the drill thread of about 3 to 4 mm have proved to comply satisfatorily to obtain perforations having an outlet size of about 0.8 mm² in the synthetic resin materials described in Claim 4.

Depending on the positioning of the conduit means, namely, horizontally, vertically or at an acute angle therebetween, and on the specific tube material used, the specific liquid to be sprayed and the surface tension between the said material and the liquid, the perforations can also be satisfactorily produced with a somewhat larger drill having, for instance, a diameter of 2 mm, or a smaller drill, having a diameter of 0.5 mm may be required.

It has been found that a bore hole of about 0.8 mm diameter or smaller will afford satisfactory jets of the liquid. These jets preferably have a diameter of 0.5 to 2 mm measured at a right angle to the longitudinal jet axis, in the vicinity of the tube wall, which diameter corresponds largely to the above-mentioned preferred diameter range of the perforations therein.

For many purposes to be explained further below, a jet of discontinuous droplets is desirable.

For many such purposes, the perforations should be aligned in a single row extending linearly along the side of the tube wall, the row thus running parallel with the longitudinal axis of the tubular conduit means.

In order to attain spray formations which are of special spatial configuration or not uniform, it is necessary to use a large number of fine nozzles. It is, however, difficult to avoid a pressure drop over a distance of several meters and maintain a uniform ejection of liquid from so many nozzles when the nozzle openings have been punched or pierced in such material as sheet iron or the like metal, when the available pressure is in the order of water pressure from the city main. The longer the distance from the pressure source and the larger the number of nozzles, the more difficult does it become to maintain a relatively uniform ejection of the water.

In order to attain a sauna-like effect it must be borne in mind that the body of a person taking such a bath is exposed to a mixture of steam and air having a temperature ranging from 70°C to close to 100°C (160° to 210°F), with short interruptions for a period of 20 to 40 minutes. This sauna bath improves blood circulation and is therapeutically beneficial in other respects.

It is a principal object of a first particular aspect of my invention to provide a liquid-spraying system which is useful in hydrotherapy, which can be used at low pressure rates such as prevail e.g., in the water main, and which has hyd-rotherapeutic effects similar to, but more readily supported than a hot shower and at least as well as a sauna bath.

It is therefore a further object of the invention to provide a shower installation, as an alternative to a sauna, which permits a person to use water above 40°C without unpleasant effects and for a period sufficiently long to cause perspiration of the users body.

These objects relating to a first particular aspect of the invention are attained by a spraying system having the various inventive features listed hereinbefore, in which the tubular conduit means have the configuration of a helix, the windings of the tubular conduit means extending about a central helix axis and defining an internal helix space in their interior.

Preferably, the helix is positioned with its axis disposed vertically; the diameter and height of said helix are such as to house a person standing or sitting within the internal space of the helix, and the perforations are located in a row on the inner side of the windings of tubular conduit means facing toward the internal helix space, whereby a plurality of fine liquid jets are directed into all zones of the said internal helix space. The vertical distance between two adjacent windings of said helix is preferably from about 10 to 20 cm; the diameter of a preferred embodiment of the helix is about 75 to 100 cm, and the number of perforations is about 200 to 400, which, at a rate of 15 perforations per meter of conduit length, requires a length of the conduit means of about 15 to 30 meters, depending on the size of the person using the shower installation.

A particularly suitable material for the tube wall of the helically shaped conduit means according to this aspect of the invention is Grilamid, "Grilamid" is marketed by Ems-Chemie AG, Zürich, Switzerland.

The above-described shower installation can be equipped with liquid flow control means and/or with temperature adjusting means for manually adjusting the flow rate and/or the temperature of the liquid being sprayed out of the perforations of the helix. These liquid flow control and/or temperature adjusting means are preferably arranged relative to the helix so as to be reachable by a person standing or sitting in the internal helix space.

Surprisingly, a person standing or sitting in the internal helix space of the above-described shower installation, being sprayed from all sides by the fine sprays from the perforated conduit means according to the invention, supports water temperatures of 40°C and considerably higher which such person could consider unsupportably hot, when a hot spray from a conventional shower having nozzle openings punched or pierced in a circular shower area impinges on a limited area of his or her skin.

The mantle of hot liquid uniformly covering the body of a person using the shower installation according to the invention at a water temperature above 40°C, e.g. 42 to 45°C, causes in the body of that person a long-lasting feeling of well being until such person begins to transpire. After a short intermediary cooling-off period, this treatment can be repeated.

As it is possible to replace the small water volume of a given temperature in the helix very rapidly by water of a different temperature, it is easy to use the shower installation according to the invention for taking an alternating hot and cold bath.

While, under a conventional shower, a considerable proportion of the water from the water jets, due to their size, is reflected from the skin, the water from very fine jets of the helical shower installation according to the invention largely remains on the skin, thus affording a higher degree of efficiency of the energy consumed in heating the water.

The quality of the therapeutical treatment offered by the helical shower installation according to the invention can be further enhanced or diversified by admixing suitable adjuvants with the water being sprayed. These adjuvants can be costly perfumes or the like because the water consumption by the novel shower installation is very restricted, e.g. from 120 to 180 liters during 10 minutes of treatment while a full bath in a bath tub requires about 200 to 400 liters of water.

It is very convenient, if the temperature adjusting means such as a hot-and-cold water mixing valve can be reached by the person taking the shower in standing or sitting position. Intermediary showering with cold water thus becomes possible without having to leave the installation as one must do in a sauna.

The foregoing as well as other objects and advantages of the present invention and the particular aspects thereof will become apparent by reference to the following detailed description thereof with reference to the accompanying drawings which illustrate, by way of example, preferred embodiments of installations according to the invention.

In the drawings:

Fig. 1 shows a perspective view of a preferred embodiment of a shower installation according to the invention,

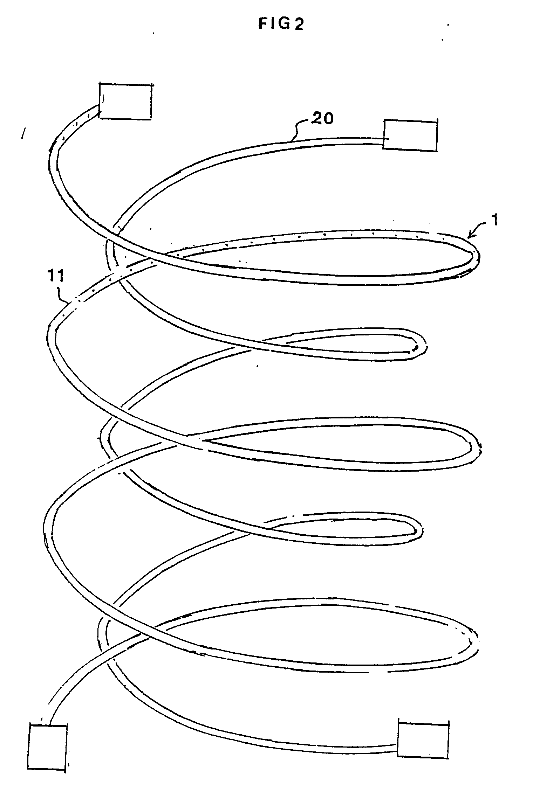

Fig. 2 is a schematic representation of a first embodiment of a liquid-liquid extractor according to the invention,

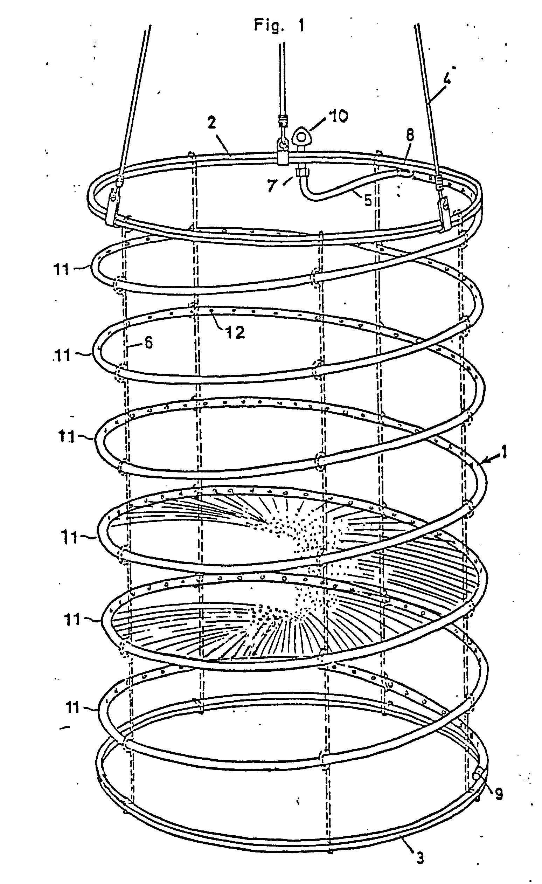

The embodiment of a shower installation according to the invention as shown in Fig. 1 comprises a hose 1 of polyvinyl chloride having a nylon fiber reinforcement. The hose is preferably 15 m long and has a circular cross sectional area having an internal diameter of 15 mm. The hose is laid in the shape of a helix having a top ring 2 and a bottom ring 3 as well as six intermediate coil windings 11, with a pitch of about 15 cm. Vertically extending nylon strings which are suspended from the top ring 2 hold the windings in position as a helix.

The ring 2 is preferably suspended from a bathroom ceiling or a frame (not shown) by means of suspension cords or rods 4. By means of a connecting inlet socket 7, a water-supply tube 5 is connected to a tap 10 of the water main and the other end of tube 5 is connected by means of a hose coupling 8 to the upper end of the hose 1. The hose coupling 8 is firmly attached to the upper ring 2. The level of the helical hose 1 above the floor can be altered by lengthening or shortening the correspondingly devised suspension cords or rods 4.

On the side 11a of the windings 11 which faces toward the central space defined by them, the hose 1 is provided with perforations 12 which have been produced with the twist drill mentioned hereinbefore at distances of about 7 cm from each other, resulting in 20 perforations per meter, or 300 distributed uniformly over the entire length of the hose 1. The lower end 9 of the last winding 11 of the hose 1 is attached to the lower ring 3 and closed, for instance by a ligature or stopper (not shown). An outlet valve (not shown) can be provided at this end 9, in order to empty the hose 1 rapidly when not used.

The sprays 18 which are ejected from the perforations 12 have been shown in the second loop 11 of the hose, counting from the bottom end.

A person standing or sitting in the helix space inside the windings 11 will be hit about 300 fine jets whose points of impingement will be distributed over his entire body.

If in lieu of the tap 10, there is installed a temperature adjusting hot-and-cold water valve, then a person taking a shower inside the helix can easily reach such valve and adjust the temperature of the water, for instance changing rapidly from 40°C to 10°C and back, thus attaining the hydrotherapeutically valuable effect of an alternating hot-and-cold bath or of a sauna.

As a hot water reservoir is usually kept at a water temperature of 50 to 60°C, the user can go as high above 40°C as he finds supportable until he begins to transpire.

In order to get in or out of the internal helix space the lower ring 3 can be lifted on one side high enough to enter the internal space or leave it comfortably.

It is also possible to lead the supporting cords 4 over an overhead roller (not shown) and attach a sand bag or the like counter weight to their free end. The helix can then be raised or lowered without effort as desired.

Instead of a nylon-reinforced polyvinyl chloride hose, a hose made of Grilamid is preferred because the polyvinyl chloride hose is much heavier, it changes its form when filled with a liquid such as water, and is thus more complicated to hold in a frame, and requires a larger number of suspending elements. The heavier PVC helix may cause a slight claustrophobia in some persons, which the much lighter appearing Grilamid hose is less likely to do so.

## Claims

1. A therapeutically effective liquid-spraying system comprising:

(a) an elongated tubular conduit means adapted for the flow of liquid therethrough, and being of the configuration of a helix (1) having a central helix axis and confining an internal helix space, said helix (1) being positioned with its axis disposed vertically, the diameter and height of said helix being such as to house a person standing or sitting within the internal space of said helix, which conduit means comprise;

(b) a tube wall of liquid-tight, elastically resilient material, being non-swelling in contact with water of a temperature of at least 60°C, said tube wall surrounding an elongated conduit interior,

(c) liquid feeding means connected to one of the conduit ends and adapted for causing a liquid flow into said conduit interior,

(d) closing means for at least substantially closing off the other end of said conduit means,

(e) a plurality of uniform capillary active perforations (12) of substantially circular cross sectional area through said tube wall, said perforations being substantially uniformly distributed over a spraying zone of determined length of said conduit means tube wall,

the perforations (12) being located in a row on the inner side of the tubular conduit means facing toward the internal helix space and directing a plurality of fine liquid jets toward the said helix axis in all zones of said internal helix space, characterized in that,

—said perforations (12) have an outlet size in the order of 0.8 mm diameter.

—the length of the spraying zone is from about 10 to 20 meters,

—the distance between two adjacent perforations (12) ranges from at least 2.5 to 10 cm, and preferably from about 5 to 7 cm, and

—the internal diameter of the conduit is about 15 mm.

2. The spraying system of Claim 1, characterized in that the number of peforations (12) is about 200 to 400 over the entire length of the helix (1).

3. The spraying system of Claim 2, characterized in that the number of said perforations (12) is at least 15 per meter of the spraying zone.

4. The spraying system of Claim 1, characterized in that said tube wall material is a thermoplastic synthetic resin having a tensile modulus of from about 1000 to 6000 $N/mm^2$ and a flexural modulus at 23°C of from about 500 up to 5000 $N/mm^2$.

5. The spraying system of Claim 1, characterized in that the thickness of said tube wall is from 0.8 to 2.5 mm.

6. The spraying system of Claim 1, characterized in that the distance between two adjacent windings (11) of said helix (1) is from about 10 to 20 cm.

7. The spraying system of Claim 1, characterized in that the diameter of said helix (1) is about 75 to 100 cm.

8. The spraying system of Claim 1, characterized in that said liquid feeding means comprise liquid flow control means (10) for manually adjusting the flow rate of the liquid being sprayed out of said perforations (12), said liquid flow control means (10) being arranged relative to said helix (1) so as to be reachable by a person standing or sitting in the internal helix space.

9. The spraying system of Claim 1, characterized in that said liquid feeding means comprise liquid temperature-adjusting means for manually adjusting the temperature of the liquid being sprayed out of said perforations (12), said temperature-adjusting means being arranged relative to said helix (1) so as to be reachable by a person standing or sitting in the internal helix space.

## Patentansprüche

1. Ein therapeutisch wirksames Brausesystem mit:

(a) einem verlängerten röhrenförmigen Leitungssystem, das für das Fliessen von Flüssigkeit durch dieses angepasst ist und einen Helixinnenraum umschliesst, deren Helix- (1) achse vertikal gestellt ist, deren Durchmesser und Höhe eine stehende oder sitzende Person im Helixinneren Platz bieten, deren Leitungsteile enthalten:

(b) eine Schlauchwand von wasserfestem elastisch geschmeidigem Material, das in Berührung mit Wasser von wenigstens 60° nicht anschwillt, und dessen Schlauchwand einen verlängerten Leistungsinnenraum umgibt,

(c) eine Flüssigkeit zuführende Einrichtung, die an ein Leitungsende angeschlossen und für das Fliessen von Flüssigkeit durch das Leitungsinnere angepasst ist,

(d) Verschliessvorrichtung um das andere Ende der Leitung wenigstens praktisch schliessen zu können,

(e) eine Vielzahl von gleichmässigen kapillaraktiven Perforationen (12) mit praktisch kreisrundem Querschnitt durch die erwähnte Schlauchwand, welche Perforationen praktisch gleichmässig über die Brausezone der vorgesehenen Länge der Leitungswand vertiet sind, mit den Perforationen in Reihe an der Innenseite der Schlauchwand angeordnet und gegen den Helixinnenraum gewendet, eine Vielzahl von feinen Düsenspritzern gegen die Helixachse in allen Zonen des Helixinnenraumes richtend, dadurch charakterisiert dass,

—die erwähnten Perforationen (12) eine Oeffnungsweite in der Grössenordnung von 0,8 mm Durchmesser haben,

—die Länge der Brausezone von ca. 10 bis 20 m varriiert,

—der Abstand zwischen zwei benachbarten Peforationen von mindestens 2,5 bis zu 10 cm, vorzugsweise zwischen 5 und 7 cm beträgt und der innere Durchmesser des Schlauches ungefähr 15 mm beträgt

2. Das Brausesystem nach Anspruch 1, dadurch gekennzeichnet, dass die Zahl der Perforationen (12) über die ganze Länge der Helix (1) zwischen 200 und 400 liegt.

3. Das Brausesystem nach Anspruch 2, dadurch charakterisiert, dass die genannten Perforationen (12) mindestens 15 p.m. der Brausezone betragen.

4. Das Brausesystem nach Anspruch 1, dadurch charakterisiert, dass das erwähnte Schlauchwandmaterial ein thermoplastischer Kunststoff mit einem Zugspannungsmodul von ca. 1000 bis 6000 N/mm² und einem Biege Elastizitätsmodul bei 23° von ca. 500 bis 5000 N/mm² beträgt.

5. Das Brausesystem nach Anspruch 1, dadurch charakterisiert, dass die Dicke der erwähnten Schlauchwandung zwischen 0,8 und 2,5 mm liegt.

6. Das Brausesystem nach Anspruch 1, dadurch charakterisiert, dass der Abstand zwischen zwei übereinander liegenden Helixwindungen (11) zwischen 10 und 20 cm liegt.

7. Das Brausesystem nach Anspruch 1, dadurch gekennzeichnet, dass der Durchmesser der Helix zwischen ca. 75 und 100 cm liegt.

8. Das Brausesystem nach Anspruch 1, dadurch charakterisiert, dass die erwähnten Flüssigkeitszufuhrteile, Fliesskontrollhandhaben (10) enthalten, um die Fliessgeschwindigkeit der aus den Perforationen (12) zu verbrausenden Flüssigkeit, manuell zu steuern, wobei dise Flüssigkeitskontrollgeräte (10) relativ zur Helix (1) so angeordnet sind, dass sie von einer im Helixinneren sitzenden oder stehenden Person leicht erreichbar sind.

9. Das Brausesystem nach Anspruch 1, dadurch gekennzeichnet, dass die erwähnten Flüssigkeitszufuhrvorrichtungen Temparaturanpassungsinstrumente zur manuellen Anpassung der Temperatur der aus den Perforationen (12) zu verbrausenden Flüssigkeit enthalten, wobei diese Flüssigkeitszufuhrinstrumente relativ zur Helix (Wendel) 1 so angeordnet sind, dass sie für eine im Helixinnenraum Stehende oder sitzende Person in Griffnähe sind.

## Revendications

1. Appareil à douche à effet thérapeutique, dont les caractéristiques sont les suivantes:

(a) un conduit sous forme de tube creux et allongé adapté pour permettre l'écoulement du liquide, et dont la configuration est celle d'une hélice (1), ayant un axe central en hélice et contenant un espace central en hélice,

ladite hélice (1) étant positionnée selon son axe vertical, le diamètre et la hauteur de ladite hélice permettant à une personne d'être debout ou assise dans l'espace interne de ladite hélice, dont les instruments de conduite comprennent:

(b) une paroi sous forme de tube, d'un matériau résistant à l'eau, élastique et flexible, ne gonflant pas en contact avec de l'eau d'une température jusqu'à 60°, ladite paroi sous forme de tube entourant un espace intérieur du conduit allongé,

(c) installations d'apport de liquide reliées à l'une des extrémités du conduit et adaptées pour permettre un flux liquide dans ledit conduit intérieur,

(d) moyens de fermeture pour fermer au moins substantiellement l'autre extrémité dudit conduit,

(e) une plurité de perforations (12) actives capillairement de manière uniforme, d'une coupe transversale substantielle dans ladite paroi sous forme de tube, lesdites perforations étant pratiquement réparties uniformément sur une zone d'arrosage d'une longueur déterminée sur ladite paroi sous forme de tube et servant à la conduite du liquide,

les perforations (12) étant situées sur une rangée dans le côté intérieur de l'installation de conduite tubulaire, face à l'espace interne en forme d'hélice et dirigeant une pluralité de jets de liquide en direction dudit axe en hélice dans toutes les zones dudit espace interne en forme d'hélice, caractérisé par le fait que,

—lesdites perforations (12) ont un diamètre d'ouverture de l'ordre de 0,8 mm,

—la longueur de la zone d'arrosage est de 10 à 20 m.,

—la distance entre deux perforations adjacentes (12) se situe entre au moins 2,5 à 10 cm, et de préférence entre 5 et 7 cm, et

—le diamètre interne du conduit est de l'ordre de 15 mm.

2. Le système de douche de la revendication 1, caractérisé par la fait que le nombre de perforations (12) est au moins de 200 à 400 sur toute la longueur de l'hélice (1).

3. Le système de douche de la revendication 2, caractérisé par le fait que le nombre desdites perforations (12) est d'au moins 15 par mètre dans la zone d'arrosage.

4. Le système de douche de la revendication 1, caractérisé par le fait que le matériau de ladite paroi sous forme de tube consiste en une résine systhétique thermoplasique ayant un module de tension d'à peu près 1000 à 6000 N/mm² et un module de flexibilité à 23° d'à peu près 500 à 5000 N/mm².

5. Le système de douche de la revendication 1, caractérisé par le fait que l'épaisseur de ladite paroi sous forme de tube est de 0,8 à 2,5 mm.

6. Le système de douche de la revendication 1, caractérisé par le fait que la distance entre deux spirales adjacentes (11) de ladite hélice (1) est de 10 à 20 cm.

7. Le système de douche de la revendication 1, caractérisé par le fait que le diamètre de ladite hélice (1) est environ de 75 à 100 cm.

8. Le système de douche de la revendication 1, caractérisé par le fait que ladite installation d'apport du liquide comprend un moyen de contrôle du flux liquide (10) pour ajuster manuellement l'importance de l'apport du liquide giclé par lesdites perforations (12), lesdits moyens d'ajustement de la température étant arrangés par rapport à ladite hélice (1) de manière à être accessibles à une personne se tenant debout ou assise dans l'espace intérieur de l'hélice.

9. Le système de douche de la revendication 1, caractérisé par le fait que ladite installation d'apport du liquide comprend un moyen pour ajuster manuellement la température du liquide étant dispersé à partir dès orifices (12), les instruments d'apport du liquide étant arrangés relatif de ladite hélice (1) en ordre pour étant accessible par une personne étant debout ou assise dans l'espace interne de la hélice.

Fig. 1

EP 0 101 066 B1

FIG 2